**Europäisches Patentamt**

**European Patent Office**

**Office européen des brevets**

(19)

(11) Publication number: **0 218 299**
**B1**

## (12) EUROPEAN PATENT SPECIFICATION

(45) Date of publication of the patent specification:
15.03.89

(51) Int. Cl.⁴: **A01B 59/06**, B60P 5/00,
G01G 19/08

(21) Application number: **86201706.8**

(22) Date of filing: **02.10.86**

(54) Weighing device suitable for mounting between a tractor and an apparatus supported by it.

(30) Priority: **09.10.85 NL 8502749**

(43) Date of publication of application:
**15.04.87 Bulletin 87/16**

(45) Publication of the grant of the patent:
**15.03.89 Bulletin 89/11**

(84) Designated Contracting States:
**AT BE DE FR GB IT LU NL SE**

(56) References cited:
**DE-B- 1 209 788**
**FR-A- 1 408 514**
**US-A- 2 872 990**

(73) Proprietor: **van de Vliert, Jakob, Edeseweg 2,
NL-6733 AE Wekerom(NL)**

(72) Inventor: **van de Vliert, Jakob, Edeseweg 2, NL-6733 AE
Wekerom(NL)**

(74) Representative: **de Wit, Gerard Frederik, Ir. et al,
Breitnerlaan 146, NL-2596 HG Den Haag(NL)**

## Description

The invention relates to a weighing device provided with two frames movable with respect to each other, between which a weight detector is mounted, the first of said frames being provided with three attachment members, two of which at the lower side and one at the upper side for attachment to a three-points support of a tractor and the other being provided with attachment members to attach an apparatus or such like.

Such a weighing device has been described in applicant's older European Patent Application 85 201 770.6, publication number 0 181 034, not published before the priority date of this application.

The invention aims to improve this older proposal.

With this older proposal the difficulty occurs that by mounting the weighing device the distance between the tractor and the apparatus supported by it increases. By reason of this the apparatus comes at a greater distance from the rear axle of the tractor, so that the tractor will turn over at a lower weight of the apparatus than in case the weighing device would not have been mounted. This problem is the more serious, because of course the weighing device itself has weight.

The invention provides a solution, which enables a decrease of the distance between the tractor and the apparatus supported by it to a value which practically corresponds to the value without the mounting of a weighing device and which in principle can even be smaller than it would be without mounting the weighing device.

When considering the problem occurring when mounting such a weighing device it should be pointed to it, that the weighing device should be able to cooperate with three-points lift devices of tractors, whereas the suspended weighing device has to be able to perform an upward and downward swaying movement.

On the other hand the weighing device has to be suitable for attaching apparatus. Experience shows, however, that apparatus in agriculture have no normalized attachment points at all and that these attachment points may differ considerably as well for the lower attaching points with respect to their mutual distance as for the upper attachment point with respect to its height.

With all these things still space has to be left free for attachment to the three-points lift device of a tractor and to allow its normal manoeuvres.

Up till now these problems have resulted in that it was only considered to have the attachment of the first frame made at the location of this first frame. This results automatically in an increase of the distance between the apparatus and the rear axle of the tractor, which comes down to a decrease of the possible weight supported by the apparatus with at least ten per cent.

The invention provides a solution which eliminates the latter disadvantage in a very considerable extend.

Accordingly the invention provides that at least the attachment members located at the lower side for attachment of the first frame to the tractor are mounted to the outside of the first frame and displaced from said frame in the direction away from the tractor.

Because with the invention the attachment point of the tractor to the first frame is shifted towards the side away from the tractor, it is possible to have the attachment of the apparatus to the second frame almost in the same vertical plane as the attachment of the tractor to the first frame. Anyhow these attachment points have a considerable smaller horizontal distance from each other than is possible without applying the invention. The one and the another is, however, dependent on the used attachment members and also on the shape of the lift arms of the tractor, which limits the degree in which the attachment point of the tractor to the first frame can be shifted towards the side away from the tractor. In a practical embodiment, which was suitable for almost any common agricultural apparatus, the increase of the distance between the tractor and the apparatus, due to the mounting of the weighing device was reduced from 20 cm to 2 cm.

It is well known to use hitches to attach agricultural tools to a tractor. When applying the invention such a hitch can be mounted to the second frame enabling a quick replacement of the apparatus attached to the tractor. Examples of hitches of this type are shown in DE-B 1 209 788, FR-A 1 408 514 and US-A 2 872 990. These known hitches consist essentially of two coupling members, the one adapted to be connected to a tractor and the other to an agricultural apparatus. These coupling members are provided with means to be securely but disconnectable fixed to each other. In FR-A 1 408 514 the connection points of the first coupling member to the tractor are located below the second coupling member, when coupled to the first one. The same holds about for DE-B 1 209 788. Both these hitches have no relation to weighing devices and the problem to reduce the distance between the tractor and the apparatus is neither indicated nor solved. The latter is clear from the fact, that the second coupling member is provided with attachment means for connecting the agricultural apparatus to it, which are displaced in a rather important extend in the direction towards said apparatus.

According to a further elaboration of the invention it is provided that the said attachment members are located beyond the main body of the second frame in the direction away from the tractor.

Practice has shown, that this feature normally can be combined with sufficient adaptability of the attachment point with the tractor as well as that with the apparatus.

According to a further additional feature of the invention such adaptability is improved in that the said lower attachment members are mounted to arms located at the outer side of the first frame, which arms at their outer sides are beveled in the direction towards the tractor.

Another further improvement consists in that the second frame is provided with arms for transversely adjustably supporting attachment members for the apparatus, the lower side of these arms being beveled in the direction towards the first frame.

With the invention it is important to have frames which occupy little space, allow the displacement of the attachment points away from the tractor and give ample opportunity for adaption to differing dimensions of the tractor three-points lift system and/or the apparatus.

A favourable solution for this problem consists in that the frames are narrow at their upper sides and have at their lower sides vertical portions, the attachment members being mounted to the outer side of said portions.

With the known art as well as with the invention the frames may be connected to each other by means of flexible strips stiffened by plates. With the invention a great vertical distance between these strips and consequently a robust construction can be realized by providing that the frames at their upper and lower sides are connected to each other by means of a spring strip clamped between mounting strips of each of the frames, which spring strips themselves are provided with stiffening plates over almost their entire length between the mounting strips.

The invention in the following is further elucidated on hand of the drawing, in which:

figure 1 is frontal view of the weighing device viewed from the tractor side;
figure 2 is a side view of this weighing device;
figure 3 is a top view of it; and
figure 4 is a frontal view from the apparatus side.

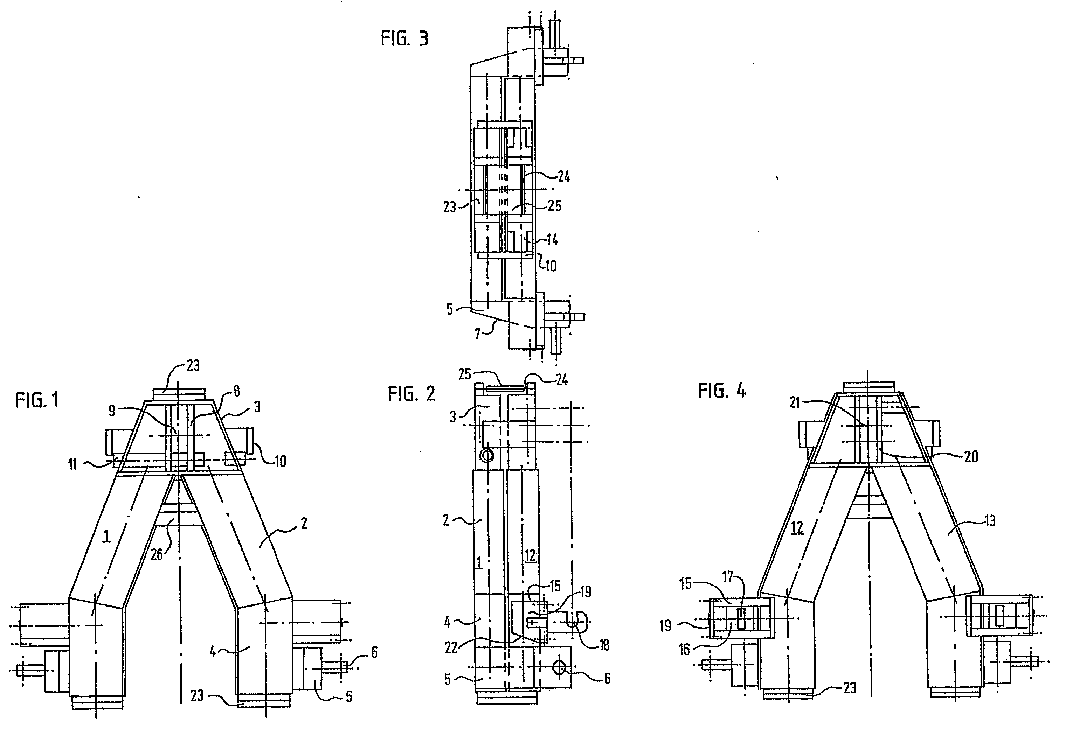

The frame 1 visible in fig. 1 has two box beams 2, which at their upper side end in U-shaped beams 3. To the lower sides of the box beams 2 further box beams 4 have been connected with a rearwardly extending arm 5 with at its end a protruding round pin 6 for receiving the lower link of a three-point lift device of a tractor.

As more detailed has been shown in fig. 3 at 7, the arm 5 is beveled at its outer side in the direction towards the tractor. The frame 1 has at its upper side two vertical plates 8, in which a set of holes, indicated only with their axis lines 9, may be drilled for receiving a rod for connection to the upper link of a three-points lift device of a tractor.

Further a bush 11 has been mounted in which a (non shown) unround rod is inserted for cooperation with blocking plates 10, which rod may be provided with a lever and when rotated engages the lower sides of the plates 10.

In the same way as the first frame the second frame 12 has two converging box beams 13 to the upper side of which again U-shaped beams have been connected. By means of supporting members 14 (fig. 3) the blocking plates 10 are connected to the second frame. At its lower side, but above the arms 5, the second frame is provided with arms 15 which have at their upper and lower sides guide grooves in which a plate 16 may slide, supporting an arm 17 which at its upper side has a recess 18 for receiving a horizontal bar of an apparatus. The plates 16 are transversely displaceable in the guides of arms 15, but will jam sufficiently to counter further displacements once the apparatus is suspended from the weighing device. Moreover the locking plates 19, which can be fixed with non shown screws, see to it that the plates 16 cannot drop out from the guides of arms 15.

The frame 12 has at its upper side two vertical plates 20 with three sets of opposing holes, which have been indicated by means of the axis lines 21 and in which rods can be inserted for receiving a coupling member for coupling to an apparatus. Such like coupling members may be an immediate part of the apparatus or may be provided with a first eye for coupling to a rod inserted in the holes indicated with the axis lines 21 and a second eye for coupling to a part of the apparatus.

The hooks formed by the arms 17 and the recesses 18 are only shown as examples and in many cases it is possible to use shorter hooks, for which reason the plates 16 with the hooks attached to them are interchangeable.

But even with the relatively large hooks shown, it is clear, that the attachment of the apparatus occurs almost at the same distance from the tractor as the suspension of the weighing device.

Because the arms 15 at their lower side are beveled, shown at 22 in fig. 2, the arm connecting the pin 6 to the tractor can sway upwards with respect to the weighing device.

The connection between both frames 1 and 12 is realized by means of mounting strips 23 between which spring strips 24 are clamped. Preferably the mounting occurs by welding along three sides. As more clearly shown in fig. 2 the spring strip 24 is at both sides covered with a stiffening plate 25. With this construction, in which the spring strips preferably have a thickness of 2 mm, the mounting strips 23 a width of 25 mm and the spring strips a length of 180 mm and a width of 150 mm a whole is obtained, that at the one hand yields sufficiently and at the other hand is sufficiently robust against all sorts of irregular loads. Because the spring strips as well as the mounting strips are made of stainless steel not a single objection exists to working in the free air. The distances of the free spring strips 24 between the mounting strips 23 and the stiffening plates 25 needs to be only a few mm. The attachment of the spring strips to the stiffening plates occurs by means of welding at the outer side, whereas also the parts of the spring strips exposed to flexure do not border immediately on the welding regions.

The weight detector may be mounted in a way corresponding to that which is shown in European Patent Application EP-A 0 181 034, for instance to the horizontal beams 26 of the frames.

## Claims

1. Weighing device provided with two frames (1, 12) movable with respect to each other, between which a weight detector is mounted, the first (1) of said frames being provided with three attachment members (6, 8), two (6) of which at the lower side and one (8) at the upper side for attachment to a three-points support of a tractor and the other (12) being provided with attachment members (17, 21) to attach an apparatus or such like, wherein at least the attachment members (6) located at the lower side for attachment of the first frame (1) to the tractor are mounted to the outside of the first frame and displaced from said frame in the direction away from the tractor.

2. Weighing device according to claim 1, characterized in that the said attachment members are located beyond the main body (13) of the second frame (12) in the direction away from the tractor.

3. Weighing device according to claim 1 or 2, characterized in that the said lower attachment members (6) are mounted to arms (5) located at the outer side of the first frame (1) which arms at their outer sides are beveled in the direction towards the tractor.

4. Weighing device according to claim 1, 2 or 3, characterized in that the second frame (12) is provided with arms (15) for transversely adjustably supporting attachment members (17) for the apparatus, the lower side (22) of these arms (15) being beveled in the direction towards the first frame (1).

5. Weighing device according to one or more of the claims 1–4, characterized in that the frames are narrower at their upper sides than at their lower sides, which have vertical portions, the attachment members (6, 17) being mounted to the outer side of the said portions.

6. Weighing device according to any of the preceding claims, characterized in that the frames at their upper and lower sides are connected to each other by means of a spring strip (24) clamped between mounting strips (23) of each of the frames, which spring strips themselves are provided with stiffening plates over almost their entire length between the mounting strips.

## Patentansprüche

1. Wägevorrichtung, versehen mit zwei Gestellen (1, 12), die gegenseitig bewegbar sind und zwischen welchen ein Gewichtsmessteil montiert ist, wobei das erste (1) der genannten Gestelle mit drei Befestigungsteilen (6, 8) versehen ist, wovon zwei (6) an der unteren Seite und eines (8) an der oberen Seite für Befestigung an eine Dreipunktaufhängevorrichtung eines Schleppers, und das andere (12) mit Befestigungsteilen (17, 21) zur Befestigung eines Gerätes oder dergleichen versehen ist, in welcher wenigstens die Befestigungsteile (6), die sich an der unteren Seite für die Befestigung des ersten Gestells (1) an dem Schlepper befinden, an der Aussenseite des ersten Gestells befestigt sind und hinsichtlich des Gestells verschoben sind in der Richtung vom Schlepper weg.

2. Wägevorrichtung nach Anspruch 1, dadurch gekennzeichnet, dass die Befestigungsteile sich dem Hauptkörper (13) des zweiten Gestells (12) vorüber in der Richtung weg vom Schlepper befinden.

3. Wägevorrichtung nach Anspruch 1 oder 2, dadurch gekennzeichnet, dass die genannten unteren Befestigungsteile (6) an Armen (5) montiert sind, die sich an der Aussenseite des ersten Gestells (1) befinden und an ihren Aussenseite abgeschrägt sind in der Richtung dem Schlepper entgegen.

4. Wägevorrichtung nach Anspruch 1, 2 oder 3, dadurch gekennzeichnet, dass das zweite Gestell (12) mit Armen (15) versehen ist, um in Querrichtung einstellbar Befestigungsteile für das Gerät zu unterstützen, wobei die untere Seite (22) dieser Arme in der Richtung dem ersten Gestell (1) entgegen abgeschrägt sind.

5. Wägevorrichtung nach einem oder mehreren Ansprüchen 1–4, dadurch gekennzeichnet, dass die Gestelle an ihren oberen Seiten schmaler sind als an ihren unteren Seiten, welche senkrechte Teile haben, wobei die Befestigungsteile (6, 17) an der Aussenseite der genannten Teile montiert sind.

6. Wägevorrichtung nach einem willkürlichen der vorangehenden Ansprüche, dadurch gekennzeichnet, dass Gestelle an ihren oberen und unteren Seiten miteinander verbunden sind mittels eines Federstreifens (24), der zwischen Montierungsstreifen (23) jedes Gestells eingeklemmt ist, welche Federstreifen über nahezu ihre ganze Länge zwischen den Montierungsstreifen mit Versteifungsplatten versehen sind.

## Revendications

1. Dispositif de pesage, prévu de deux bâtis (1, 12) relativement mouvables, entre lesquels un détecteur de poids a été monté, le premier (1) desdits bâtis étant prévu de trois membres d'attachement (6, 8), dont deux (6) au côté inférieur et un (8) au côté supérieur pour attachement au dispositif de leval à trois points d'un tracteur et l'autre (12) étant prévu des membres d'attachement (17, 21) pour attacher un appareil ou semblable, dans lequel au moins les membres d'attachement (6) placés au côté inférieur pour attacher le premier bâti (1) au tracteur ont été montés au côté extérieur du premier bâti et déplacés dudit bâti dans la direction détournée du tracteur.

2. Dispositif de pesage suivant la revendication 1, caractérisé en ce que lesdits membres d'attachement sont placés au delà du corps principal (13) du deuxième bâti (12) dans la direction détournée du tracteur.

3. Dispositif de pesage suivant la revendication 1 ou 2, caractérisé en ce que lesdits membres d'attachement inférieurs (6) sont montés aux bras (5) se trouvants au côté extérieurs du premier bâti (1), lesquels bras sont biseautés à leurs côtés extérieurs dans la direction vers le tracteur.

4. Dispositif de pesage suivant la revendication 1, 2 ou 3, caractérisé en ce que le second bâti (12) a été prévu des bras (15) pour supporter les membres d'attachement (17) de manière ajustable transversement, le côté inférieur (22) desdits bras (15) étant biseauté dans la direction vers le premier bâti (1).

5. Dispositif de pesage suivant une ou plusieurs des revendications 1–4, caractérisé en ce que les bâtis sont plus étroits à leurs côtés supérieurs qu'à leurs côtés inférieurs, qui ont des parts verticals, les membres d'attachement (6, 17) étant montés au coté extérieur desdits parts.

6. Dispositif de pesage suivant une quelconque des revendications précédentes, caractérisé en ce que les bâtis à leurs côtés supérieurs et inférieurs sont connectés l'un à l'autre par moyen d'une bande de ressort (24) coincée entre bandes de montage (23) de chaque bâti, lesquelles bandes de ressort elles-mêmes étant prévues des plaques radisseuses le long à peu près leur longueur total entre les bandes de montage.

FIG. 4

FIG. 3

FIG. 2

FIG. 1